# EUROPÄISCHE PATENTSCHRIFT

(11) **EP 1 311 807 B1**
(45) Veröffentlichungstag und Bekanntmachung des Hinweises auf die Patenterteilung: **04.09.2019**
(21) Anmeldenummer: 01956572.0
(22) Anmeldetag: 28.07.2001
(51) Int. Cl.: G01F 23/284

(54) **VORRICHTUNG ZUR BESTIMMUNG DES FÜLLSTANDES EINES FÜLLGUTS IN EINEM BEHÄLTER**
DEVICE FOR DETERMINING THE LEVEL OF A FILLER MATERIAL IN A CONTAINER
DISPOSITIF DESTINE A DETERMINER LE NIVEAU DE REMPLISSAGE D'UN CONTENANT

(30) Priorität: 21.08.2000 DE 10040943
(43) Veröffentlichungstag der Anmeldung: 21.05.2003
(73) Patentinhaber: Endress+Hauser SE+Co. KG, 79689 Maulburg (DE)
(72) Erfinder: BURGER, Stefan, 21400 Reinsdorf (DE); HARDELL, Alexander, NL-2284 TA Rijswijk (NL)
(74) Vertreter: Andres, Angelika Maria
(86) Internationale Anmeldenummer: PCT/EP2001/008761
(87) Internationale Veröffentlichungsnummer: WO 2002/016889

(56) Entgegenhaltungen:
- EP-A- 0 884 567
- EP-A- 0 922 942
- DE-A- 19 617 963

## Beschreibung

Die Erfindung bezieht sich auf eine Vorrichtung zur Bestimmung des Füllstandes eines Füllguts in einem Behälter mit einer Signalerzeugungseinheit, die elektromagnetische Messsignale erzeugt, mit einer Sende-/Empfangseinheit, die die Messsignale über eine Hornantenne in Richtung der Oberfläche des Füllguts aussendet und die die an der Oberfläche des Füllguts reflektierten Echosignale empfängt, wobei die Hornantenne aus einem Wellenleiter besteht, der sich in Abstrahlrichtung in einen Hohlraum einer definierten Form aufweitet, mit einer Auswerteeinheit, die anhand der Laufzeit der Messsignale den Füllstand in dem Behälter ermittelt, und wobei zumindest ein dielektrisches Füllmaterial vorgesehen ist, das den Wellenleiter teilweise ausfüllt. Bevorzugt arbeiten Vorrichtungen der vorgenannten Art im Mikrowellenbereich und sind allgemein unter dem Namen Mikrowellen-FüllstandsMessgeräte bekannt. Allerdings ist es auch prinzipiell möglich, die erfindungsgemäße Vorrichtung mit Ultraschall-Messsignalen zu betreiben.

Kritisch bei allen Messgeräten, die den Füllstand eines Füllguts in einem Behälter über die Laufzeit von Messsignalen bestimmen, ist die Bildung von Ablagerungen, die sog. Ansatzbildung, im Antennenbereich. Lagert sich Ansatz, also Kondensat und/oder Feuchtigkeit sowie Verschmutzung jeglicher Art, im Innenraum der Antenne ab, so hat dies einen direkten Einfluß auf die Ausbreitung und das Reflexionsverhalten der Messsignale: Es treten Störsignale auf, die sich den eigentlichen Messsignalen überlagern und so stark werden können, dass letztlich eine verläßliche Füllstandsmessung unmöglich wird.

Aus dem Stand der Technik ist es bekannt geworden, eine Antenne durch ein sog. Radom wirkungsvoll vor Ansatzbildung zu schützen. Ein Radom ist eine dünne, folienartige Schutzschicht, die im Bereich der Außenkante der Antenne angebracht ist und verhindert, dass Kondensat und/oder Feuchtigkeit in den Innenraum der Antenne vordringen kann. Nachteil des Radoms ist, dass es infolge seiner fragilen Ausgestaltung wenig beständig gegen hohe Drücke ist. Sein Einsatz im Bereich der ProzeßMesstechnik ist daher relativ eng begrenzt.

Aus dem Auszug des Buchs: Olver, A. D. et. Al., "Microwave Horns and Feeds", IET, 1993, Seiten 338-341, 364 ist eine Multimoden-ornantenne bekannt geworden, die teilweise mit einem dielektrischen Material ausgefüllt ist. Das dielektrische Material modifiziert das Pattern des dominanten TE 11 Modes.

Aus der EP 0 922 942 A1 ist ein mit Mikrowellen arbeitendes Füllstandsmessgerät bekannt geworden, das einen Einsatz aus einem dielektrischen Material aufweist. Das dielektrischen Material besteht aus PTFE, einem Füllmaterial und einem Faserstoff. Weiterhin wird ein Verfahren zur Herstellung des dielektrischen Materials beschrieben.

Der Erfindung liegt die Aufgabe zugrunde, eine stabile Vorrichtung zur Füllstandsmessung vorzuschlagen, bei der die Ansatzbildung in besonders kritischen Bereichen der Antenne, wie z. B. dem Innenraum der Antenne, ausgeschlossen ist.

Die Aufgabe wird dadurch gelöst, dass das zumindest eine dielektrische Füllmaterial den aufgeweiteten Hohlraum der Hornantenne vollständig ausfüllt, so das eine Ansatzbildung im Innenraum der Hornantenne ausgeschlossen ist, und dass die Außenfläche des dielektrischen Füllmaterials als Linse geformt ist. Durch die Verwendung eines Einsatzes aus einem dielektrischen Material lassen sich - falls dies gewünscht ist - gleichzeitig mehrere Probleme, die bei Antennen des Standes der Technik auftreten können, beseitigen:
- Die Antenne weist eine sehr stabile Konstruktion auf.
- Die Antenne wird effektiv vor Ansatzbildung geschützt.
- Durch den Einsatz des dielektrischen Materials wird eine hohe Druckbeständigkeit der Antenne erzielt.
- Das gewählte Design des dielektrischen Materials, das in den Innenraum der Antenne eingebracht ist, unterstützt die Fokussierung der elektromagnetischen Messsignale.

Der aufgeweiteten Hohlraum hat übrigens bevorzugt die Form eines Trichters. Entsprechend gestaltete Antennen heißen üblicherweise Hornantennen. Bei einer Hornantenne kann die Innenfläche entweder glatt sein, oder sie weist eine gewisse Strukturierung auf. Hornantennen mit strukturierter Innenfläche sind unter der Bezeichnung 'corrugated horn antennae' allgemein bekannt. Sinn und Zweck der strukturierten Innenfläche der Antenne ist es, den Messsignalen eine Phasenverschiebung aufzuprägen, die so bemessen ist, dass am Antennenausgang eine im wesentlichen ebene Wellenfront abgestrahlt wird.

Der aufgeweitete Hohlraum der Antenne ist jedoch nicht auf die Trichterform, die bei Hornantennen üblich ist, beschränkt. Beispielsweise kann der aufgeweitete Hohlraum auch die Form eines Parabolspiegels oder aber eine zylindrische Form haben.

Bei dem Füllmaterial kann es sich im Grunde genommen um ein beliebiges dielektrisches Material handeln. Beispielsweise wird als Füllmaterial Teflon, Saphir, Keramik oder Quarzglas zur Anwendung kommen.

Bei der erfindungsgemäßen Vorrichtung ist die Außenfläche des Füllmaterials als Linse geformt. So kann die Außenfläche des Füllmaterials konvex ausgestaltet sein. Ebenso kann die Außenfläche des Füllmaterials auch die Form einer Fresnel-Linse aufweisen.

Bevorzugt ist die Frequenz der hochfrequenten elektromagnetischen Messsignale größer als 30 GHz. Liegt die Frequenz in dieser Größenordnung, können die Antennen relativ klein ausgestaltet sein. Gerade bei kleinen Antennen ist die Ansatzbildung in hohem Maße problematisch, da die Innenmaße des Hohlleiters meist klein sind im Vergleich zu der Größe von Kondensattropfen oder Schmutzteilchen, die den Ansatz ausmachen. Das bedeutet, dass oft schon ein einzelner Tropfen oder einzelnes Schmutzteilchen ausreicht, um den Hohlleiter zu verstopfen und sehr starke Störreflexionen hervorzurufen. Ist der Antennenhohlraum erfindungsgemäß mit einem Dielektrikum ausgefüllt, wird der Hohlleiter sowie alle Antennenbereiche mit kleinen Innenmaßen wirkungsvoll vor Kondensat und anderen Verschmutzungen geschützt. An der relativ großen Außenfläche des Dielektrikums ist die Ansatzbildung weniger kritisch, da einzelne Tropfen oder Teilchen nicht den ganzen Durchmesser bedecken und leichter wieder abtropfen können.

Wie bereits an vorhergehender Stelle erwähnt, kann durch die Oberflächenform und Oberflächenstruktur des Füllmaterials darüber hinaus ein Fokussierungseffekt erreicht werden: Der Bereich, in dem die Messsignale auf der Oberfläche des Füllguts auftreffen, ist genau definiert, wodurch Störsignale, also Messsignale, die nicht an der Oberfläche des Füllguts, sondern an irgendwelchen Einbauten im Behälter oder an der Behälterwand reflektiert worden sind, wenig wahrscheinlich werden.

Gemäß einer vorteilhaften Weiterbildung der erfindungsgemäßen Vorrichtung führt die Sende-/Empfangseinheit die elektromagnetischen Messsignale durch die Rückwand oder durch eine Seitenwand des Wellenleiters in die Antenne hinein bzw. aus der Antenne heraus.

Eine besonders vorteilhafte, da kostengünstige Lösung sieht vor, dass das dielektrische Füllmaterial lediglich einen Teilbereich des Wellenleiters ausfüllt, wobei sich besagter Teilbereich an den aufgeweiteten Hohlraum der Antenne anschließt. Als Beispiel sei hier eine Antenne genannt, bei der aus Gründen der Temperaturentkopplung zwischen Füllstandssensor und Prozeß/Prozeßmedium die Länge des Wellenleiters relativ groß ausfällt.

Die Erfindung wird anhand der nachfolgenden Zeichnungen näher erläutert. Es zeigt:
Fig. 1: eine schematische Darstellung einer Ausgestaltung der erfindungsgemäßen Vorrichtung,
Fig. 2: eine schematische Darstellung einer zweiten Ausgestaltung einer Vorrichtung zur Bestimmung des Füllstands eines Füllguts,
Fig. 3: eine schematische Darstellung einer dritten Ausgestaltung einer Vorrichtung zur Bestimmung des Füllstands eines Füllguts, und
Fig. 4: eine schematische Darstellung einer vierten Ausgestaltung einer Vorrichtung zur Bestimmung des Füllstands eines Füllguts.

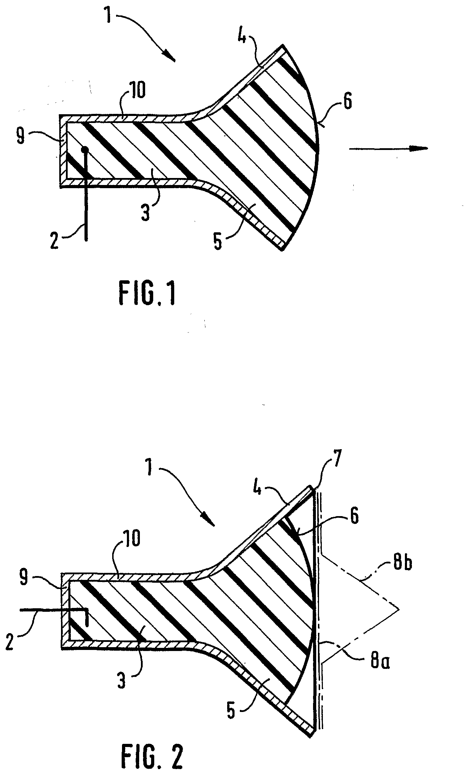

Fig. 1 zeigt eine schematische Darstellung einer Ausgestaltung der erfindungsgemäßen Vorrichtung. Die Antenne 1 besteht aus einem Wellenleiter 3, an den sich in Abstrahlrichtung der elektromagnetischen Messsignale ein aufgeweiteter Hohlraum 4 anschließt. Im dargestellten Fall handelt es sich bei der Antenne 1 übrigens um eine Hornantenne mit kreisförmigem Querschnitt.

Die elektromagnetischen Messsignale werden über die Sende-/Empfangseinheit 2 seitlich in die Antenne 1 eingekoppelt bzw. seitlich aus der Antenne 1 ausgekoppelt. Die Signalerzeugungseinheit und die Regel-/Auswerteeinheit sind in den Figuren nicht gesondert dargestellt.

Der Innenraum des Wellenleiters 3 und des aufgeweiteten Hohlraums 4 ist mit einem dielektrischen Füllmaterial 5 aufgefüllt. Dieses dielektrische Füllmaterial 5 schützt die Antenne 1 vor Ansatzbildung und Beschädigung. Je nach Ausgestaltung kann das dielektrische Füllmaterial 5 jedoch auch noch andere Funktionen erfüllen: Es verleiht der Antenne 1 eine hohe Stabilität; es schafft eine druckbeständige Schutzabdeckung für die Antenne 1, und/oder es dient dazu, die Messsignale optimal zu fokussieren.

Zwecks Fokussierung der Messsignale ist die Außenfläche 6 des dielektrischen Materials 5 im gezeigten Fall konvex geformt. Andere Ausformungen der Außenfläche sind selbstverständlich möglich. Als Beispiel sei an dieser Stelle noch einmal die Ausbildung der Außenfläche als Fresnel-Linse genannt.

In Fig. 2 ist eine schematische Darstellung einer zweiten Ausgestaltung einer Vorrichtung zur Bestimmung des Füllstands eines Füllguts zu sehen. Wiederum besteht die Antenne 1 aus einem Wellenleiter 3 und einem aufgeweiteten Hohlraum 4, der sich unmittelbar an den Wellenleiter 3 anschließt. Die Ein- und Auskopplung der Messsignale erfolgt über eine Sende-/Empfangseinheit 2, die durch die Rückwand 9 der Antenne 1 geführt ist.

Der Wellenleiter 3 und der aufgeweitete Hohlraum 4 sind nahezu vollständig mit dem dielektrischen Füllmaterial ausgefüllt. Die Außenfläche 6 des dielektrischen Füllmaterials 5 hat im gezeigten Fall eine konvexe Form, wobei die höchste Erhebung des dielektrischen Füllmaterials 5 unterhalb der Außenkante 7 des aufgeweiteten Hohlraums 4 zu liegen kommt. Durch diese Ausgestaltung wird die Außenfläche 6 des dielektrischen Materials 5 sehr effektiv gegen Beschädigungen beim Transport, beim Ein- und Ausbau und bei der Lagerung der Antenne 1 geschützt.

Ist die Außenfläche 6 des dielektrischen Füllmaterials 5 strukturiert - z.B. in Form einer Fresnel-Linse - ist es vorteilhaft, wenn - in Abstrahlrichtung der elektromagnetischen Messsignale - vor der Außenfläche 6 noch eine zusätzliche Schutzschicht 8a; 8b vorgesehen ist. Bei der Schutzschicht 8a handelt es sich um eine ebene Scheibe, die als separates Teil im Bereich der Außenkante 7 der Antenne 1 befestigt ist. Hingegen zeigt die Schutzschicht 8b eine kegelförmige Ausstülpung, was wiederum der Ansatzbildung hervorragend entgegenwirkt. Möglich ist natürlich auch eine Schutzschicht, die z. B. eine kegelförmige Einbuchtung aufweist.

Es versteht sich darüber hinaus von selbst, dass die Antenne 1 sowohl einen kreisförmigen als auch einen eckigen Querschnitt aufweisen kann.

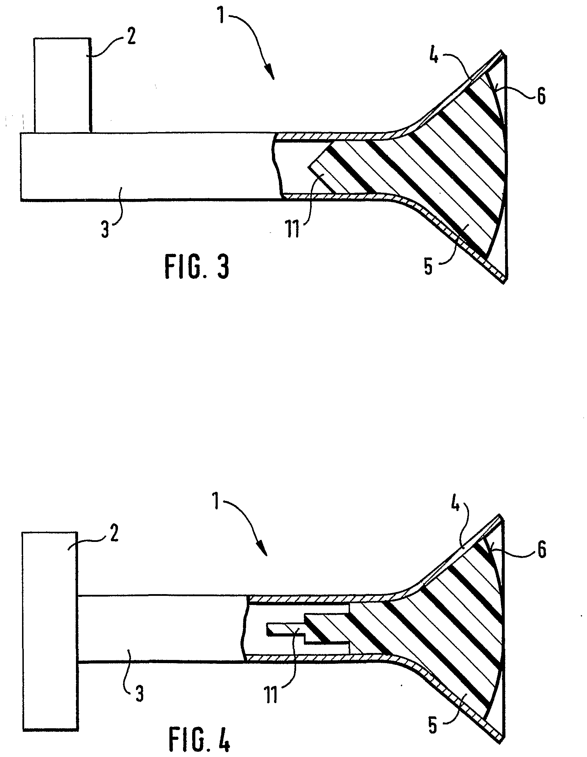

Die Figuren Fig. 3 und Fig. 4 zeigen schematische Darstellungen einer dritten bzw. einer vierten Ausgestaltung einer Vorrichtung zur Bestimmung des Füllstands eines Füllguts. Während bei der in Fig. 3 gezeigten Ausführungsform die Sende-/Empfangs-einheit 2 die Messsignale durch die Seitenwand 9 in den Wellenleiter 3 hineinführt bzw. aus dem Wellenleiter 3 herausführt, erfolgt die Einkopplung bzw. die Auskopplung der Messsignale bei der in Fig. 4 gezeigten Ausgestaltung durch die Rückwand 9.

Beiden Ausgestaltungen (Fig. 3, Fig. 4) ist gemeinsam, dass der Wellenleiter 3 relativ lang dimensioniert ist. Eine derartige Ausgestaltung hat gewisse Vorteile, wenn hochfrequente Messsignale zum Einsatz kommen. Hochfrequent bedeutet dabei, dass die Frequenz größer als ca. 30 GHz ist. Insbesondere bei einer derartig ausgestalteten Antenne 1 ist es nicht erforderlich, dass das dielektrische Material 5 den Wellenleiter 3 und den aufgeweiteten Hohlraum 4 vollständig ausfüllt. So genügt es, wenn das dielektrische Füllmaterial 5 den aufgeweiteten Hohlraum 4 und den sich an den aufgeweiteten Hohlraum 4 anschließenden Bereich des Wellenleiters 3 ausfüllt. Eine optimierte Anpassung beim Übergang der Messsignale von dem füllmaterialfreien Bereich des Wellenleiters 3 auf den Bereich des Wellenleiters 3, in dem Füllmaterial 5 angeordnet ist, wird dadurch erreicht, dass der entsprechende Endbereich 11 des dielektrischen Füllmaterials 5 eine besondere Form aufweist. In diesem Zusammenhang hat sich übrigens ein kegel- oder pyramidenförmiger Übergangsbereich bestens bewährt.

### Bezugszeichenliste

- 1: Antenne
- 2: Sende-/Empfangseinheit
- 3: Hohlleiter
- 4: aufgeweiteter Hohlraum
- 5: Dielektrisches Füllmaterial
- 6: Außenfläche
- 7: Außenkante
- 8a: Zusätzliche Schutzschicht
- 8b: Zusätzliche Schutzschicht
- 9: Rückwand
- 10: Seitenwand
- 11: Endbereich des dielektrischen Füllmaterials

## Patentansprüche

1. Vorrichtung zur Bestimmung des Füllstandes eines Füllguts in einem Behälter mit einer Signalerzeugungseinheit, die hochfrequente elektromagnetische Messsignale erzeugt, mit einer Sende-/Empfangseinheit, die die Messsignale über eine Hornantenne (1) in Richtung der Oberfläche des Füllguts aussendet und die die an der Oberfläche des Füllguts reflektierten Echosignale empfängt, wobei die Hornantenne (1) aus einem Wellenleiter (3) besteht, der sich in Abstrahlrichtung in einen Hohlraum (4) einer definierten Form aufweitet, und mit einer Auswerteeinheit, die anhand der Laufzeit der Messsignale den Füllstand in dem Behälter ermittelt, und wobei ein dielektrisches Füllmaterial (5) vorgesehen ist, das den Wellenleiter (3) zumindest teilweise ausfüllt,
**dadurch gekennzeichnet,**
**dass** das dielektrische Füllmaterial (5) den aufgeweiteten Hohlraum (4) der Hornantenne (1) vollständig ausfüllt, so dass eine Ansatzbildung im Innenraum der Hornantenne (1) ausgeschlossen ist, und
**dass** die Außenfläche (6) des dielektrischen Füllmaterials (5) als Linse geformt ist.

2. Vorrichtung nach Anspruch 1,
**dadurch gekennzeichnet,**
**dass** die Außenfläche (6) des dielektrischen Füllmaterials (5) konvex ausgestaltet ist.

3. Vorrichtung nach Anspruch 1,
**dadurch gekennzeichnet,**
**dass** die Außenfläche (6) des dielektrischen Füllmaterials (5) die Form einer Fresnel-Linse aufweist.

4. Vorrichtung nach einem oder mehreren der vorhergehenden Ansprüche,
**dadurch gekennzeichnet,**
**dass** die Frequenz der hochfrequenten elektromagnetischen Messsignale größer als 30 GHz ist.

5. Vorrichtung nach Anspruch 1,
**dadurch gekennzeichnet,**
**dass** die Sende-/Empfangseinheit (2) die elektromagnetischen Messsignale durch die Rückwand (9) oder durch eine Seitenwand (10) des Wellenleiters (3) in die Hornantenne (1) hineinführt bzw. aus der Hornantenne (1) herausführt.

6. Vorrichtung nach einem oder mehreren der Ansprüche 1 bis 3,
**dadurch gekennzeichnet,**
**dass** das dielektrische Füllmaterial (5) lediglich einen Teilbereich des Wellenleiters (3) ausfüllt, wobei sich der Teilbereich an den aufgeweiteten Hohlraum (4) der Hornantenne (1) anschließt.

## Claims

1. Apparatus designed to determine the level of a product in a vessel with a signal generation unit that generates high-frequency electromagnetic measuring signals, with a transmission/reception unit which emits the measuring signals via a horn antenna (1) in the direction of the surface of the product and which receives the echo signals reflected at the surface of the product, wherein the horn antenna (1) consists of a waveguide (3), which broadens into a cavity (4) of a defined shape in the direction of radiation, and with an evaluation unit which determines the level in the vessel using the transit time of the measuring signals, and wherein a dielectric filler (5) is provided that fills the waveguide (3) at least partially,
**characterized in that**
the dielectric filler (5) completely fills the expanded cavity (4) of the horn antenna (1) such that deposit buildup in the interior of the horn antenna (1) is ruled out, and such that the outer surface (6) of the dielectric filler (5) has the shape of a lens.

2. Apparatus as claimed in Claim 1,
**characterized in that**
the outer surface (6) of the dielectric filler material (5) is convex.

3. Apparatus as claimed in Claim 1,
**characterized in that**
the outer surface (6) of the dielectric filler material (5) has the shape of a Fresnel lens.

4. Apparatus as claimed in one or more of the previous claims,
**characterized in that**
the frequency of the high-frequency electromagnetic measuring signals is greater than 30 GHz.

5. Apparatus as claimed in Claim 1,
**characterized in that**
the transmission/reception unit (2) routes the electromagnetic measuring signals into the horn antenna (1) or out of the horn antenna (1) through the rear wall (9) or through a side wall (10) of the waveguide.

6. Apparatus as claimed in one or more of the Claims 1 to 3,
**characterized in that**
the dielectric filler material (5) only fills a subsection of the waveguide (3), wherein the subsection continues on from the expanded cavity (4) of the horn antenna (1).

## Revendications

1. Dispositif destiné à la détermination du niveau d'un produit dans un réservoir avec une unité de génération de signaux, qui génère des signaux de mesure électromagnétiques haute fréquence, avec une unité d'émission / de réception, qui émet les signaux de mesure via une antenne cornet (1) en direction de la surface du produit et qui reçoit les signaux d'écho réfléchis à la surface du produit, l'antenne cornet (1) étant constituée d'un guide d'ondes (3), qui s'élargit en direction du rayonnement dans un espace creux (4) d'une forme prédéfinie, et avec une unité d'exploitation, qui détermine, sur la base du temps de propagation des signaux de mesure, le niveau dans le réservoir, et un matériau de remplissage diélectrique (5) étant prévu, lequel matériau remplit au moins partiellement le guide d'ondes (3),
**caractérisé**
**en ce que** le matériau de remplissage diélectrique (5) remplit entièrement l'espace creux (4) élargi de l'antenne cornet (1), si bien qu'une formation de dépôt dans l'espace intérieur de l'antenne cornet (1) est exclue, et
**en ce que** la surface extérieure (6) du matériau de remplissage diélectrique (5) est formée en tant que lentille.

2. Dispositif selon la revendication 1,
**caractérisé**
**en ce que** la surface extérieure (6) du matériau de remplissage diélectrique (5) est de forme convexe.

3. Dispositif selon la revendication 1,
**caractérisé**
**en ce que** la surface extérieure (6) du matériau de remplissage diélectrique (5) présente la forme d'une lentille de Fresnel.

4. Dispositif selon l'une ou plusieurs des revendications précédentes,
**caractérisé**
**en ce que** la fréquence des signaux de mesure électromagnétiques haute fréquence est supérieure à 30 GHz.

5. Dispositif selon la revendication 1,
**caractérisé**
**en ce que** l'unité d'émission / de réception émet les signaux de mesure électromagnétiques dans l'antenne cornet (1) ou les reçoit de l'antenne cornet à travers la paroi arrière (9) ou à travers la paroi latérale (10) du guide d'ondes.

6. Dispositif selon l'une ou plusieurs des revendications 1 à 3,
**caractérisé**
**en ce que** le matériau de remplissage diélectrique (5) ne remplit qu'une zone partielle du guide d'ondes (3), la zone partielle étant attenante à l'espace creux (4) élargi de l'antenne cornet.
